# FASCICULE DE BREVET EUROPEEN

(11) **EP 2 977 634 B1**
(45) Date de publication et mention de la délivrance du brevet: **30.11.2016**
(21) Numéro de dépôt: 15172996.9
(22) Date de dépôt: 19.06.2015
(51) Int. Cl.: F16D 13/70, F16F 15/14

(54) **EMBRAYAGE A FRICTION DESTINE A ETRE INTERPOSE ENTRE UN VILEBREQUIN ET UNE BOITE DE VITESSES D'UN VEHICULE**
REIBUNGSKUPPLUNG ZUR EINFÜGUNG ZWISCHEN EINE KURBELWELLE UND EIN GETRIEBE EINES FAHRZEUGS
FRICTION CLUTCH INTENDED TO BE INSERTED BETWEEN A CRANKSHAFT AND A GEARBOX OF A VEHICLE

(30) Priorité: 17.07.2014 FR 1456870
(43) Date de publication de la demande: 27.01.2016
(73) Titulaire: Valeo Embrayages, 80009 Amiens Cedex 2 (FR)
(72) Inventeur: Dael, Dominique, 76870 Gaillefontaine (FR); Couturier, Benoit, 80440 Glisy (FR)

(56) Documents cités:
- EP-A2- 1 780 434
- DE-A1- 10 005 545
- DE-A1-102008 005 138
- FR-A1- 2 791 107

## Description

La présente invention concerne un embrayage à friction destiné à être interposé entre un vilebrequin et une boîte de vitesses d'un véhicule, l'embrayage comprenant un dispositif d'amortissement d'oscillations de torsion pendulaire.

On connaît de la demande EP 1 780 434 un embrayage comprenant:
- un disque de friction mobile en rotation autour d'un axe,
- un volant apte à être entraîné par le vilebrequin et dont une portion forme le plateau de réaction de l'embrayage, et
- un dispositif d'amortissement d'oscillations de torsion, comprenant un support mobile en rotation autour de l'axe et portant au moins un corps pendulaire mobile par rapport au support.

Du fait de la présence de la portion du volant qui forme le plateau de réaction de l'embrayage, l'espace disponible pour accueillir le dispositif d'amortissement est restreint, conduisant à l'implantation de ce dispositif sur un faible rayon par rapport à l'axe de rotation. Une telle implantation, associée à des corps pendulaires de faible poids, ne permet pas au dispositif d'assurer un filtrage efficace des oscillations de torsion.

L'invention a pour but de fournir un embrayage à friction dans lequel les oscillations de torsion sont mieux filtrées par le dispositif d'amortissement.

L'invention y parvient, selon l'un de ses aspects, à l'aide d'un embrayage à friction destiné à être interposé entre un vilebrequin et une boîte de vitesses d'un véhicule, l'embrayage comprenant :
- un disque de friction mobile en rotation autour d'un axe,
- un volant apte à être entraîné par le vilebrequin et dont une portion forme le plateau de réaction de l'embrayage, et
- un dispositif d'amortissement d'oscillations de torsion, comprenant un support mobile en rotation autour de l'axe et portant au moins un corps pendulaire mobile par rapport au support, le support étant apte à être en permanence solidarisé en rotation à l'arbre d'entrée de la boîte de vitesses, et le corps pendulaire comprenant au moins une portion s'étendant radialement au-delà de la dimension radiale minimale, notamment du diamètre intérieur, de la portion du volant formant le plateau de réaction de l'embrayage.

Selon l'invention, le corps pendulaire chevauche au moins partiellement, du point de vue radial, le plateau de réaction de l'embrayage. Le corps pendulaire est alors déplacé radialement vers l'extérieur par rapport au corps pendulaire selon la demande EP 1 780 434. Le filtrage fourni par le dispositif d'amortissement de torsion est ainsi accru. Un tel positionnement du corps pendulaire peut également permettre d'utiliser un corps pendulaire de poids plus important et/ou un corps pendulaire présentant un débattement plus important.

Le corps pendulaire peut en totalité s'étendre radialement au-delà de la dimension radiale minimale, notamment du diamètre intérieur, de la portion du volant formant le plateau de réaction de l'embrayage.

La masse pendulaire peut être axialement disposée dans un logement dont chaque extrémité axiale est définie par le volant. Autrement dit, le logement est alors fermé à ses deux extrémités axiales. Chacune de ces extrémités axiales est dans ce cas fermée par une paroi du volant.

Le corps pendulaire peut ainsi se retrouver axialement entre le vilebrequin du moteur thermique et la face de la portion du volant définissant le plateau de réaction appelée face de friction, cette dernière étant apte à venir au contact d'une garniture de friction pour assurer la transmission du couple fourni par le moteur thermique vers la boîte de vitesses.

Les oscillations de torsion peuvent être liées aux acyclismes du moteur thermique.

Au sens de la présente demande, « axialement » signifie « parallèlement à l'axe de rotation », « radialement » signifie « le long d'un axe appartenant à un plan perpendiculaire à l'axe de rotation et coupant cet axe de rotation », et « angulairement » ou « circonférentiellement » signifie « autour de l'axe de rotation ».

Au sens de la présente demande, « en permanence solidarisé en rotation à l'arbre de sortie » signifie que lorsque l'embrayage est assemblé, il n'est pas possible de supprimer la liaison en rotation entre le support du dispositif d'amortissement d'oscillations de torsion et l'arbre d'entrée, sauf à démonter l'embrayage. Il n'est ainsi pas prévu selon l'invention de dispositif permettant de sélectivement connecter et déconnecter en rotation le support du dispositif d'amortissement d'oscillations de torsion et l'arbre d'entrée de la boîte de vitesses.

Le volant peut comprendre deux parties rigidement liées entre elles, l'une des extrémités axiales du logement étant définie par l'une des parties du volant et l'autre extrémité axiale du logement étant définie par l'autre partie du volant. Les deux parties peuvent chacune présenter des découpes qui, lorsque les deux parties sont assemblées, définissent le logement. L'une des parties du volant est par exemple apte à être fixée au vilebrequin tandis que l'autre partie du volant présente la portion qui définit le plateau de réaction de l'embrayage

En variante, le volant peut comprendre plus de deux parties, par exemple trois.

Dans un plan perpendiculaire à l'axe de rotation du disque de friction, le logement s'étend par exemple tout autour dudit axe, présentant une forme annulaire.

La liaison rigide entre les deux parties du volant peut être réalisée à l'aide de vis, notamment à l'aide de vis de fixation de l'embrayage. Ces vis de fixation permettent par exemple de fixer le couvercle de l'embrayage sur le volant et elles peuvent ainsi également servir à la fixation entre elles des parties du volant.

Lorsque des vis relient les deux parties du volant, ces vis peuvent être orientées selon une direction parallèle à l'axe de rotation du disque.

En variante, les vis reliant les deux parties du volant peuvent être orientées selon une direction non parallèle à l'axe de rotation du disque, notamment une direction perpendiculaire à l'axe de rotation du disque.

En variante, la liaison rigide entre les deux parties du volant est réalisée à l'aide de filetages complémentaires ménagés sur des surfaces en regard desdites parties du volant. L'une des parties du volant est par exemple munie d'un filetage sur une surface intérieure tandis que l'autre partie du volant est munie d'un filetage complémentaire sur une surface extérieure venant au contact de ladite surface intérieure lors de l'assemblage du volant.

En variante, la liaison rigide entre les deux parties du volant est réalisée à l'aide d'un système de baïonnette. L'une des partie du volant présente par exemple un ou plusieurs ergots coopérant avec des rainures portées par l'autre partie du volant de manière à immobiliser les deux parties du volant l'une par rapport à l'autre.

Les deux parties du volant ne sont avantageusement pas réalisées dans les mêmes matériaux. L'une des parties du volant est par exemple réalisée en fonte tandis que l'autre partie du volant est réalisée en acier. La partie apte à être fixée au vilebrequin, respectivement la partie présentant la portion définissant le plateau de réaction de l'embrayage, est par exemple réalisée en fonte tandis que la partie présentant la portion définissant le plateau de réaction de l'embrayage, respectivement la partie apte à être fixée au vilebrequin, est réalisée en acier.

En variante, l'une des parties du volant est réalisée en fonte GS tandis que l'autre partie est réalisée en fonte GL.

Le choix de matériaux différents permet de choisir un matériau mieux adapté à la fonction de la partie du volant en question, l'un des matériaux choisis étant plus adapté à la coopération avec le vilebrequin du moteur et l'autre matériau étant plus adapté à la coopération avec le disque de friction.

Ces matériaux peuvent par exemple présenter une flexibilité différente.

En variante, le même matériau est utilisé pour les différentes parties du volant.

Dans tout ce qui précède, la liaison rigide entre les deux parties du volant peut être réalisée dans une zone radialement extérieure du volant. Le volant présente par exemple un bord radialement extérieur disposé à une distance radiale donnée par rapport à l'axe de rotation, cette distance étant par exemple un rayon, et la liaison rigide peut être disposée à une distance radiale par rapport audit axe supérieure à 60% ; notamment 70%, notamment 80%, notamment 90% de la valeur de la distance radiale donnée.

Le support peut porter une pluralité de corps pendulaires, ces derniers se succédant angulairement. Le support porte par exemple un nombre de corps pendulaires compris entre deux et dix.

Tous les corps pendulaires peuvent être configurés pour filtrer une seule et même valeur d'ordre des oscillations de torsion.

En variante, certains corps pendulaires sont configurés pour filtrer une première valeur d'ordre d'oscillations de torsion tandis que d'autres corps pendulaires sont configurés pour filtrer une autre valeur d'ordre d'oscillations de torsion. L'une de ces valeurs d'ordre d'oscillations peut être égale à l'ordre d'excitation du moteur thermique, c'est-à-dire au nombre d'explosions de ce moteur par tour de vilebrequin.

Chaque corps pendulaire peut comprendre une paire de masses pendulaires, cette dernière comprenant deux masses solidaires dont le déplacement par rapport au support est guidé par au moins un organe de roulement. L'organe de roulement est par exemple un rouleau de forme cylindrique. Le cas échéant, deux organes de roulement guident le déplacement des masses d'une paire par rapport au support.

Selon un premier exemple de mise en oeuvre de l'invention, chaque organe de roulement coopère d'une part avec une piste de roulement définie par une masse et d'autre part avec une piste de roulement définie par le support, pour guider le déplacement desdites masses. Autrement dit, chaque masse d'une paire définit une piste de roulement pour cet organe de roulement qui présente ainsi trois zones de contact se succédant axialement : une zone de contact avec la piste d'une des masses de la paire, une zone de contact avec la piste du support, et une zone de contact avec la piste de l'autre masse.

Selon un deuxième exemple de mise en oeuvre de l'invention, chaque organe de roulement coopère d'une part avec une piste de roulement définie par un organe de liaison solidarisant les deux masses d'une paire et d'autre part avec une piste de roulement définie par le support, pour guider le déplacement desdites masses.

L'organe de liaison, encore appelé « entretoise » permet ainsi selon le deuxième exemple d'une part de maintenir les deux masses à une distance axiale l'une de l'autre constante, et d'autre part, à guider leur déplacement par rapport au support.

L'organe de liaison est par exemple disposé axialement entre les deux masses pendulaires et reçu dans une ouverture ménagée dans le support. Dans ce cas, il existe des plans perpendiculaires à l'axe de rotation dans lesquels l'organe de roulement vient au contact à la fois de la piste de roulement définie par le support et de la piste de roulement définie par l'organe de liaison.

La piste de roulement définie par le support est par exemple formée par un bord de l'ouverture recevant l'organe de liaison et la piste de roulement définie par l'organe de liaison est par exemple formée par une partie du contour extérieur dudit organe de liaison, le cas échéant par un revêtement déposé localement sur le contour extérieur dudit organe de liaison.

Selon ce deuxième exemple, chaque corps pendulaire présente par exemple deux masses pendulaires solidarisées entre elles par deux organes de liaison décalés angulairement. Chaque organe de liaison est par exemple rigidement couplé aux masses pendulaires de la paire par soudure, frettage, ou vissage. Dans ce cas, chaque organe de liaison est reçu dans une ouverture du support dédiée audit organe de liaison.

Chaque organe de liaison peut comprendre deux barres, chaque barre s'étendant axialement et comprenant une première région rigidement couplée à une des masses pendulaires de la paire, une deuxième région rigidement couplée à l'autre masse pendulaire de la paire, et une région intermédiaire reçue dans l'ouverture du support dédiée audit organe de liaison.

La première région et la deuxième région de chaque barre peuvent former des extrémités opposées de ladite barre. Les deux barres peuvent être sensiblement identiques.

Chaque organe de liaison peut comprendre une poutre de liaison s'étendant perpendiculairement aux deux barres et étant rigidement couplée à la région intermédiaire de chacune desdites barres. En variante, la poutre de liaison qui s'étend perpendiculairement aux deux barres peut être réalisée d'une seule pièce avec ces dernières.

Lorsque l'organe de liaison comprend deux barres et une poutre de liaison telles que définies ci-dessus, la piste de roulement définie par l'organe de liaison peut être formée par une partie du contour radialement extérieur de la poutre de liaison.

Chaque paire de masses pendulaires peut comprendre au moins une pièce d'interposition disposée axialement entre le support et une masse pendulaire de ladite paire. Une telle pièce d'interposition permet d'éviter un contact entre le support et les masses pendulaires de ladite paire. Lorsque le support et les masses pendulaires sont réalisés en métal, la présence de cette pièce d'interposition permet d'éviter un contact métallique entre masses pendulaires et support, et ainsi une usure de ces éléments.

La pièce d'interposition est notamment une pièce distincte des masses pendulaires et du support. Chaque pièce d'interposition peut être portée par une des masses pendulaires. La pièce d'interposition peut se présenter sous la forme d'un patin.

Chaque corps pendulaire peut présenter un organe d'amortissement de butée visant à amortir les chocs liés à la venue du corps pendulaire dans une position en butée à l'issue de son déplacement par rapport au support. Lorsque le dispositif d'amortissement est selon le deuxième exemple de mise en oeuvre mentionné ci-dessus, l'organe d'amortissement de butée peut être porté par les masses pendulaires et/ou par les organes de liaison.

Dans tout ce qui précède, les pistes de roulement peuvent comprendre des portions incurvées, par exemple des portions concaves et/ou des portions convexes. La forme des pistes de roulement peut être telle que les corps pendulaires soient uniquement déplacés par rapport au support en translation autour d'un axe fictif parallèle à l'axe de rotation du support.

En variante, la forme des pistes de roulement peut être telle que les corps pendulaires soient déplacés par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Dans tout ce qui précède, l'embrayage peut comprendre un élément interposé axialement entre le support du dispositif d'amortissement d'oscillations de torsion et l'une au moins des parties du volant, de manière à créer un frottement entre ledit support et ladite partie du volant lors du déplacement relatif entre ce support et cette partie du volant. On rajoute ainsi de l'hystérésis au déplacement du ou des corps pendulaires.

Dans tout ce qui précède, le volant peut être flexible, c'est-à-dire qu'il est associé à une tôle flexible interposée entre le vilebrequin et le volant. Un tel exemple de volant flexible est par exemple divulgué dans les demandes FR2819566, FR2819567, FR2774440, ou encore FR2852650.

Dans tout ce qui précède, le volant peut présenter une forme permettant de réduire la signature acoustique du dispositif d'amortissement pendulaire. Cette forme est par exemple obtenue à l'aide de lamelles circonférentielles et/ou radiales du volant. Dans tout ce qui précède, le support peut s'étendre jusqu'à une zone radiale centrale de l'embrayage. Une seule et même pièce définit par exemple :
- la portion du support dans laquelle la ou les ouvertures guidant le déplacement d'un corps pendulaire est ménagée, et
- la portion du support la plus radialement intérieure, apte à être solidarisée en permanence en rotation à l'arbre d'entrée de la boîte de vitesses.

Le support du dispositif d'amortissement d'oscillations de torsion peut être distinct d'éléments d'entrée et de sortie du disque de friction, tels qu'un voile et des rondelles de guidage dudit disque. Le support est alors dédié au dispositif d'amortissement d'oscillations de torsion.

L'invention a encore pour objet, selon un autre de ses aspects, un système de transmission pour véhicule, comprenant :
- un embrayage tel que défini ci-dessus, et
- une boîte de vitesses,
le support du dispositif d'amortissement d'oscillations de torsion étant directement fixé sur l'arbre d'entrée de la boîte de vitesses, de manière à être en permanence solidaire en rotation dudit arbre.

Une seule et même pièce peut définir à la fois :
- la portion du support dans laquelle la ou les ouvertures coopérant avec un ou plusieurs organes de roulement pour guider le déplacement d'un corps pendulaire est ménagée, et
- la portion du support directement fixée sur l'arbre d'entrée de la boîte de vitesses.

La solidarisation en rotation s'effectue par exemple au moyen de cannelures ménagées sur l'arbre d'entrée de la boîte de vitesses et sur le bord radialement intérieur du support du dispositif d'amortissement d'oscillations de torsion.

L'invention a encore pour objet, selon un autre de ses aspects, un système de transmission pour véhicule, comprenant :
- un embrayage tel que défini ci-dessus,
- une boîte de vitesses, et
- un moyeu solidaire en rotation de l'arbre d'entrée de la boîte de vitesses, le support du dispositif d'amortissement d'oscillations de torsion étant directement fixé sur le moyeu, de manière à être en permanence solidaire en rotation de l'arbre d'entrée de la boîte de vitesses.

Une seule et même pièce peut définir à la fois :
- la portion du support dans laquelle la ou les ouvertures coopérant avec un ou plusieurs organes de roulement pour guider le déplacement d'un corps pendulaire est ménagée, et
- la portion du support directement fixée sur le moyeu.

La solidarisation en rotation s'effectue par exemple aux moyens de cannelures ménagées sur le moyeu et sur le bord radialement intérieur du support du dispositif d'amortissement d'oscillations de torsion.

L'invention pourra être mieux comprise à la lecture de la description qui va suivre d'un exemple non limitatif de mise en oeuvre de celle-ci et à l'examen du dessin annexé sur lequel:
- la figure 1 représente un exemple de système de transmission de véhicule comprenant un embrayage avec un dispositif d'amortissement d'oscillations de torsion, et
- la figure 2 est une vue très schématique et très partielle d'une variante du système représenté sur la figure 1.

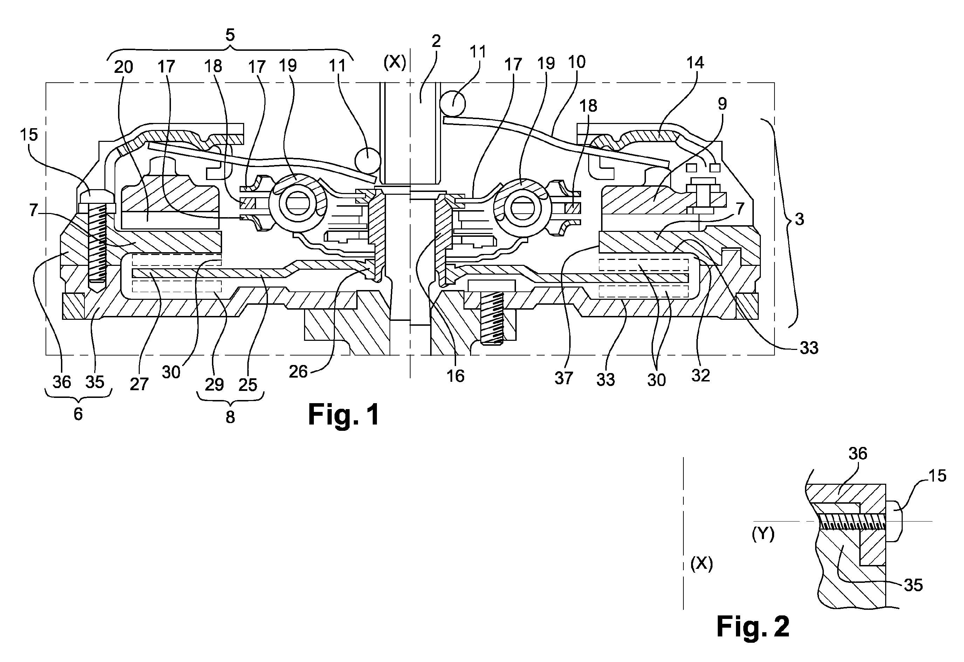

On a représenté sur la figure 1, un système de transmission 1 de véhicule selon un exemple de mise en oeuvre de l'invention. Ce système de transmission 1 est dans l'exemple considéré interposé entre le vilebrequin non représenté d'un moteur thermique et l'arbre d'entrée 2 d'une boîte de vitesses.

Le système de transmission 1 comprend un embrayage à friction 3. Ce dernier comprend :
- un disque de friction 5 mobile en rotation autour d'un axe X,
- un volant 6 apte à être entraîné par le vilebrequin du moteur et dont une portion 7 forme le plateau de réaction de l'embrayage, et
- un dispositif d'amortissement d'oscillations de torsion 8 qui sera décrit ultérieurement.

L'embrayage 3 comprend encore un plateau de pression 9 apte à se déplacer axialement sous l'effet de la force exercée par un diaphragme 10 pour transmettre le couple depuis le vilebrequin vers l'arbre d'entrée 2 de la boîte de vitesses. Une butée d'embrayage 11 représentée sur la figure 1 vient par exemple appuyer contre le diaphragme 10 pour déplacer le plateau de pression 9. Sur la partie gauche de la figure 1, la butée d'embrayage 11 est dans une position correspondant à un état débrayé de l'embrayage 3 tandis que sur la partie droite de la figure 1, la butée d'embrayage 11 est dans une position correspondant à un été embrayé de l'embrayage 3.

Comme représenté sur la figure 1, l'embrayage 3 peut encore comprendre un couvercle 14 fixé dans une zone radialement extérieure de l'embrayage 3, dans l'exemple décrit au moyen de vis 15 qui s'étendent dans l'exemple de la figure 1 parallèlement à l'axe X lorsqu'elles sont en place sur l'embrayage 3.

Dans l'exemple considéré, le système de transmission 1 comprend un moyeu 16 solidaire en rotation de l'arbre d'entrée 2 de la boîte de vitesses, et disposé autour d'une portion axiale de cet arbre 2.

De façon connue, le disque de friction 5 comprend un élément d'entrée 17 et un élément de sortie 18 entre lesquels est interposé un organe de rappel élastique 19, ce dernier permettant un déplacement en rotation limité entre les éléments d'entrée 17 et de sortie 18 du disque de friction 5. Dans l'exemple décrit, l'élément d'entrée 17 est formé par deux rondelles de guidage axialement décalées et entourant axialement l'élément de sortie 18 qui est un voile. La rondelle de guidage la plus proche du vilebrequin porte dans l'exemple considéré une plaque 20 supportant des garnitures de friction.

Comme représenté, le dispositif d'amortissement d'oscillations de torsion 8 comprend dans l'exemple considéré un support 25 d'un seul tenant qui s'étend radialement vers l'extérieur depuis une portion 26 radialement la plus intérieure vers une portion 27 la plus radialement extérieure. Le support 25 s'étend ici tout autour de l'axe X.

La portion 26 est dans l'exemple représenté solidaire en rotation, par exemple grâce à des cannelures non représentées sur la figure 1, du moyeu 16.

La portion 27 présente des ouvertures non représentées aptes à coopérer avec des organes de roulement non représentés pour guider le déplacement d'un corps pendulaires 29.

Dans l'exemple considéré, le dispositif d'amortissement d'oscillations de torsion 8 comprend plusieurs corps pendulaires 29 se succédant angulairement. Chaque corps pendulaire 29 présente dans l'exemple considéré deux masses pendulaires 30 définissant entre elles un espace axial dans lequel est disposée la portion 27 du support. Les deux masses pendulaires 30 sont par exemple solidarisées ensemble, de manière à former une paire, via deux organes de liaison non représentés. Chaque organe de liaison peut être reçu dans une ouverture propre ménagée dans la portion 27 du support. Deux organes de roulement sont par exemple associés à chaque corps pendulaire, chaque organe de roulement coopérant d'une part avec :
- une piste de roulement formée par une portion du bord de l'ouverture recevant un organe de liaison, et
- une piste de roulement formée par une portion du contour de l'organe de liaison.

Comme représenté sur la figure 1, le corps pendulaire 29 est dans l'exemple considéré reçu dans un logement 32 ménagé dans le volant 6. Ce logement 32 s'étend axialement et radialement à l'intérieur du volant 6. Le logement 32 s'étend entre deux extrémités axiales 33 formées par respectivement par deux parties 35 et 36 du volant 6. L'une des parties 35 est fixée au vilebrequin du moteur thermique tandis que l'autre partie 36 présente la portion 7 qui définit le plateau de réaction de l'embrayage 3, cette portion 7 présentant ainsi une face d'extrémité venant au contact des garnitures de friction, appelée « face de friction ».

L'une des parties du volant est par exemple en fonte tandis que l'autre partie du volant est en acier.

Les parties 35 et 36 du volant 6 sont ici solidarisées au niveau d'une zone radialement extérieure du volant 6 au moyen des vis 15 déjà mentionnées et qui servent par ailleurs à assembler le couvercle 14 de l'embrayage 3 sur le volant 6.

Dans la variante de la figure 2, les vis 15 sont orientées selon une direction Y qui est perpendiculaire à l'axe X, lorsque les vis 15 sont en place sur l'embrayage 3 et qu'elles solidarisent les parties 35 et 36 du volant 6.

Dans l'exemple représenté, la totalité d'un corps pendulaire 29 s'étend radialement extérieurement au-delà du bord radialement intérieur 37 de la portion 7 définissant le plateau de réaction de l'embrayage 3. Autrement dit, selon l'exemple représenté, le corps pendulaire 29 est entièrement disposé radialement et axialement à l'intérieur du logement 32, et donc dans le volant 6.

L'invention n'est pas limitée à l'exemple qui vient d'être décrit.

D'autres moyens de fixation entre elles des parties 35 et 36 du volant que des vis sont notamment possibles.

## Revendications

1. Embrayage à friction (3) destiné à être interposé entre un vilebrequin et une boîte de vitesses d'un véhicule, l'embrayage (3) comprenant :
- un disque de friction (5) mobile en rotation autour d'un axe (X),
- un volant (6) apte à être entraîné par le vilebrequin et dont une portion (7) forme le plateau de réaction de l'embrayage (3), et
- un dispositif d'amortissement d'oscillations de torsion (8), comprenant un support (25) mobile en rotation autour de l'axe (X) et portant au moins un corps pendulaire (29) mobile par rapport au support (25), le support (25) étant apte à être en permanence solidarisé en rotation à l'arbre d'entrée (2) de la boîte de vitesses, **caractérisé en ce que** le corps pendulaire (29) comprend au moins une portion s'étendant radialement au-delà de la dimension radiale minimale (37), notamment du diamètre intérieur, de la portion (7) du volant (6) formant le plateau de réaction de l'embrayage (3).

2. Embrayage selon la revendication 1, le corps pendulaire (29) étant axialement disposé dans un logement (32) dont chaque extrémité axiale (33) est définie par le volant (6).

3. Embrayage selon la revendication 2, le volant (6) comprenant deux parties (35, 36) rigidement liées entre elles, l'une des extrémités axiales (33) du logement (32) étant définie par l'une des parties (35) du volant et l'autre extrémité axiale (33) du logement (32) étant définie par l'autre partie (36) du volant.

4. Embrayage selon la revendication 3, la liaison rigide entre les deux parties (35, 36) du volant (6) étant réalisée à l'aide de vis (15), notamment de vis de fixation de l'embrayage, ou à l'aide de filetages complémentaires ménagés sur des surfaces en regard desdites parties (35, 36) du volant, ou à l'aide d'un système de baïonnette.

5. Embrayage selon la revendication 4, les vis étant orientées selon une direction (Y) non parallèle à l'axe de rotation (X), notamment perpendiculaire à l'axe de rotation (X).

6. Embrayage selon l'une quelconque des revendications 3 à 5, les deux parties (35, 36) du volant n'étant pas réalisées dans les mêmes matériaux.

7. Embrayage selon l'une quelconque des revendications 3 à 6, la liaison rigide entre les deux parties (35, 36) du volant (6) étant réalisée dans une zone radialement extérieure du volant (6).

8. Embrayage selon l'une quelconque des revendications précédentes, le support (25) portant une pluralité de corps pendulaires (29), chaque corps pendulaire (29) comprenant une paire de masses pendulaires (30) comprenant deux masses pendulaires (30) solidaires et dont le déplacement par rapport au support (25) est guidé par au moins un organe de roulement.

9. Embrayage selon la revendication 8, chaque organe de roulement coopérant d'une part avec une piste de roulement définie par une masse pendulaire (30) et d'autre part avec une piste de roulement définie par le support (25), pour guider le déplacement desdites masses.

10. Embrayage selon la revendication 8, chaque organe de roulement coopérant d'une part avec une piste de roulement définie par un organe de liaison solidarisant les deux masses pendulaires (30) d'une paire et d'autre part avec une piste de roulement définie par le support (25), pour guider le déplacement desdites masses.

11. Embrayage selon l'une quelconque des revendications précédentes, comprenant un élément interposé axialement entre le support (25) du dispositif d'amortissement d'oscillations de torsion (8) et l'une au moins des parties (35, 36) du volant (6), de manière à créer un frottement entre ledit support (25) et ladite partie (35, 36) du volant (6) lors du déplacement relatif entre ce support (25) et cette partie (35, 36) du volant (6).

12. Système de transmission (1) pour véhicule, comprenant :
- un embrayage (3) selon l'une quelconque des revendications précédentes, et
- une boîte de vitesses,
le support (25) du dispositif d'amortissement d'oscillations de torsion (8) étant directement fixé sur l'arbre d'entrée (2) de la boîte de vitesses de manière à être en permanence solidaire en rotation dudit arbre.

13. Système de transmission (1) pour véhicule, comprenant :
- un embrayage (3) selon l'une quelconque des revendications 1 à 11,
- une boîte de vitesses, et
- un moyeu (16) solidaire en rotation de l'arbre d'entrée (2) de la boîte de vitesses,
le support (25) du dispositif d'amortissement d'oscillations de torsion (8) étant directement fixé sur le moyeu (16) de manière à être en permanence solidaire en rotation de l'arbre d'entrée (2) de la boîte de vitesses.

## Patentansprüche

1. Reibungskupplung (3) zur Anordnung zwischen einer Kurbelwelle und einem Getriebe eines Fahrzeugs, wobei die Kupplung (3) Folgendes umfasst:
- eine um eine Achse (X) drehbewegliche Reibscheibe (5),
- ein Schwungrad (6), das geeignet ist, durch die Kurbelwelle angetrieben zu werden und wovon ein Teil (7) die Kupplungsreaktionsplatte (3) bildet, und
- eine Vorrichtung zur Dämpfung von Torsionsschwingungen (8), die einen um die Achse (X) drehbeweglichen Träger (25) umfasst und mindestens einen in Bezug auf den Träger (25) beweglichen Pendelkörper (29) trägt, wobei der Träger (25) geeignet ist, mit der Eingangswelle (2) des Getriebes dauerhaft drehfest verbunden zu sein, **dadurch gekennzeichnet, dass** der Pendelkörper (29) mindestens einen Teil umfasst, der sich über die minimale Radialabmessung (37), vor allem des Innendurchmessers, des Teils (7) des Schwungrads (6), der die Kupplungsreaktionsplatte (3) bildet, hinaus radial erstreckt.

2. Kupplung nach Anspruch 1, wobei der Pendelkörper (29) axial in einem Gehäuse (32) angeordnet ist, von dem jedes Axialende (33) durch das Schwungrad (6) definiert wird.

3. Kupplung nach Anspruch 2, wobei das Schwungrad (6) zwei untereinander starr verbundene Teile (35, 36) umfasst, wobei eines der Axialenden (33) des Gehäuses (32) durch einen der Teile (35) des Schwungrads definiert wird und das andere Axialende (33) des Gehäuses (32) durch den anderen Teil (36) des Schwungrads definiert wird.

4. Kupplung nach Anspruch 3, wobei die starre Verbindung zwischen den zwei Teilen (35, 36) des Schwungrads (6) mit Hilfe einer Schraube (15) hergestellt wird, vor allem mit einer Kupplungsbefestigungsschraube, oder mit Hilfe von auf gegenüberliegenden Oberflächen der Teile (35, 36) des Schwungrads ausgebildeten komplementären Gewinden oder mit Hilfe eines Bajonettsystems.

5. Kupplung nach Anspruch 4, wobei die Schrauben in einer Richtung (Y), die nicht parallel zu der Drehachse (X), insbesondere rechtwinklig zu der Drehachse (X), verläuft, ausgerichtet sind.

6. Kupplung nach einem der Ansprüche 3 bis 5, wobei die zwei Teile (35, 36) des Schwungrads nicht aus denselben Materialien hergestellt sind.

7. Kupplung nach einem der Ansprüche 3 bis 6, wobei die starre Verbindung zwischen den zwei Teilen (35, 36) des Schwungrads (6) in einem radial äußeren Bereich des Schwungrads (6) hergestellt ist.

8. Kupplung nach einem der vorhergehenden Ansprüche, wobei der Träger (25) mehrere Pendelkörper (29) trägt, wobei jeder Pendelkörper (29) ein Paar Pendelmassen (30) umfasst, das zwei Pendelmassen (30) umfasst, die fest verbunden sind und deren Verschiebung in Bezug auf den Träger (25) durch mindestens einen Wälzkörper geführt wird.

9. Kupplung nach Anspruch 8, wobei jeder Wälzkörper einerseits mit einer durch eine Pendelmasse (30) definierten Wälzlagerbahn und andererseits mit einer durch den Träger (25) definierten Wälzlagerbahn dahingehend zusammenwirkt, die Verschiebung der Massen zu führen.

10. Kupplung nach Anspruch 8, wobei jeder Wälzkörper einerseits mit einer Wälzlagerbahn, die durch ein Verbindungsglied definiert wird, das die zwei Pendelmassen (30) eines Paars verbindet, und andererseits mit einer durch den Träger (25) definierten Wälzlagerbahn dahingehend zusammenwirkt, die Verschiebung der Massen zu führen.

11. Kupplung nach einem der vorhergehenden Ansprüche, der ein axial zwischen dem Träger (25) der Dämpfungsvorrichtung für Torsionsschwingungen (8) und mindestens einem der Teile (35, 36) des Schwungrads (6) angeordnetes Element umfasst, um ein Reiben zwischen dem Träger (25) und dem Teil (35, 36) des Schwungrads (6) bei der Relativverschiebung zwischen diesem Träger (25) und diesem Teil (35, 36) des Schwungrads (6) zu schaffen.

12. Fahrzeugantriebssystem (1), das Folgendes umfasst:
- eine Kupplung (3) nach einem der vorhergehenden Ansprüche, und
- ein Getriebe,
wobei der Träger (25) der Dämpfungsvorrichtung für Torsionsschwingungen (8) so auf der Eingangswelle (2) des Getriebes direkt befestigt ist, dass er dauerhaft mit der Welle drehfest verbunden ist.

13. Fahrzeugantriebssystem (1), das Folgendes umfasst:
- eine Kupplung (3) nach einem der Ansprüche 1 bis 11,
- ein Getriebe, und
- eine mit der Eingangswelle (2) des Getriebes drehfest verbundene Nabe (16),
wobei der Träger (25) der Dämpfungsvorrichtung für Torsionsschwingungen (8) so an der Nabe (16) direkt befestigt ist, dass er dauerhaft mit der Eingangswelle (2) des Getriebes drehfest verbunden ist.

## Claims

1. Friction clutch (3) intended to be interposed between a crankshaft and a gearbox of a vehicle, the clutch (3) comprising:
- a friction disc (5) which can rotate about an axis (X),
- a flywheel (6) able to be driven by the crankshaft and of which a portion (7) forms the reaction plate of the clutch (3), and
- a torsion oscillation damping device (8) comprising a support (25) which can rotate about the axis (X) and which has at least one pendular body (29) movable with respect to the support (25), the support (25) being able to be permanently locked in rotation with the input shaft (2) of the gearbox, **characterized in that** the pendular body (29) comprises at least one portion extending radially beyond the minimum radial dimension (37), in particular the inside diameter, of the portion (7) of the flywheel (6) forming the reaction plate of the clutch (3).

2. Clutch according to Claim 1, the pendular body (29) being axially arranged in a housing (32) of which each axial end (33) is defined by the flywheel (6).

3. Clutch according to Claim 2, the flywheel (6) comprising two rigidly interconnected parts (35, 36), one of the axial ends (33) of the housing (32) being defined by one of the parts (35) of the flywheel and the other axial end (33) of the housing (32) being defined by the other part (36) of the flywheel.

4. Clutch according to Claim 3, the rigid connection between the two parts (35, 36) of the flywheel (6) being produced by means of screws (15), in particular screws for fastening the clutch, or by means of complementary threads formed on facing surfaces of the said parts (35, 36) of the flywheel, or by means of a bayonet system.

5. Clutch according to Claim 4, the screws being oriented in a direction (Y) non-parallel to the axis of rotation (X), in particular perpendicular to the axis of rotation (X).

6. Clutch according to any one of Claims 3 to 5, the two parts (35, 36) of the flywheel not being produced from the same materials.

7. Clutch according to any one of Claims 3 to 6, the rigid connection between the two parts (35, 36) of the flywheel (6) being produced in a radially outer region of the flywheel (6).

8. Clutch according to any one of the preceding claims, the support (25) bearing a plurality of pendular bodies (29), each pendular body (29) comprising a pair of pendular masses (30) comprising two secured pendular masses (30) and of which the movement with respect to the support (25) is guided by at least one rolling member.

9. Clutch according to Claim 8, each rolling member cooperating, on the one hand, with a raceway defined by a pendular mass (30) and, on the other hand, with a raceway defined by the support (25), in order to guide the movement of the said masses.

10. Clutch according to Claim 8, each rolling member cooperating, on the one hand, with a raceway defined by a connection member securing the two pendular masses (30) of a pair and, on the other hand, with a raceway defined by the support (25), in order to guide the movement of the said masses.

11. Clutch according to any one of the preceding claims, comprising an element interposed axially between the support (25) of the torsion oscillation damping device (8) and at least one of the parts (35, 36) of the flywheel (6), so as to create friction between the said support (25) and the said part (35, 36) of the flywheel (6) during the relative movement between this support (25) and this part (35, 36) of the flywheel (6).

12. Transmission system (1) for a vehicle, comprising:
- a clutch (3) according to any one of the preceding claims, and
- a gearbox,
the support (25) of the torsion oscillation damping device (8) being directly fixed to the input shaft (2) of the gearbox so as to be permanently locked in rotation with the said shaft.

13. Transmission system (1) for a vehicle, comprising:
- a clutch (3) according to any one of Claims 1 to 11,
- a gearbox, and
- a hub (16) locked in rotation with the input shaft (2) of the gearbox,
the support (25) of the torsion oscillation damping device (8) being directly fixed to the hub (16) so as to be permanently locked in rotation with the input shaft (2) of the gearbox.
